Europäisches Patentamt

European Patent Office

Office européen des brevets

(19)

(11) Veröffentlichungsnummer: **0 172 528**
**B1**

(12) # EUROPÄISCHE PATENTSCHRIFT

(45) Veröffentlichungstag der Patentschrift:
31.01.90

(21) Anmeldenummer: 85110194.9

(22) Anmeldetag: 14.08.85

(51) Int. Cl.⁴: **A 01 B 59/043**

(54) **Kupplungsrahmen mit wenigstens einem Haken.**

(30) Priorität: 20.08.84 US 642476

(43) Veröffentlichungstag der Anmeldung:
26.02.86 Patentblatt 86/9

(45) Bekanntmachung des Hinweises auf die Patenterteilung:
31.01.90 Patentblatt 90/5

(84) Benannte Vertragsstaaten:
AT DE FR GB IT SE

(56) Entgegenhaltungen:
DE-A- 1 482 482
DE-B- 1 263 380
FR-A- 1 443 201
FR-A- 1 559 227
FR-A- 2 199 924
US-A- 2 979 137
US-A- 3 427 046
US-A- 3 498 638
US-A- 3 531 140
US-A- 3 539 203
US-A- 3 544 133
US-A- 4 019 753
US-A- 4 415 175

(73) Patentinhaber: DEERE & COMPANY, 1 John Deere Road,
Moline Illinois 61265 (US)

(72) Erfinder: Herr, Herbert William, 107 Trible Road,
Waterloo Iowa 50701 (US)
Erfinder: Moon, Seaton, 2009 Orchard Drive, Cedar Falls
Iowa 50613 (US)
Erfinder: Hopper, James Ernest, 1531 Newell Street,
Waterloo Iowa 50701 (US)

(74) Vertreter: Feldmann, Bernhard et al, DEERE &
COMPANY European Office, Patent Department
Steubenstrasse 36-42 Postfach 503,
D-6800 Mannheim 1 (DE)

ACTORUM AG

## Beschreibung

Die Erfindung bezieht sich auf einen Kupplungsrahmen mit wenigstens einem an ihm starr angeordneten, eine Hakenausnehmung aufweisenden Haken und einem Sperrhebel, der über eine höhenverstellbare Steuerstange zwischen einer einen Anschlußbolzen in der Hakenausnehmung verriegelnden Stellung und einer den Anschlußbolzen freigebenden Stellung an dem Kupplungsrahmen vertikal verschwenkbar gelagert ist, wobei die Steuerstange mit einem Führungsteil versehen und in Höhenrichtung über einen Schlitz und einen Zapfen zwangsgeführt ist.

Kupplungsrahmen (US-A-3 544 133) dienen in der Regel zum Anschluß eines Gerätes an ein ziehendes Fahrzeug und können beispielsweise an die Dreipunktgerätekupplung eines Ackerschleppers angeschlossen werden. Im einzelnen sind solche Kupplungsrahmen mit in Dreiecksform angeordneten Haken derart versehen, daß sie einen oberen und zwei untere Haken aufweisen. Durch Absenken des Kupplungsrahmens und nachfolgendes Zurücksetzen des Ackerschleppers können dann an einem Gerät vorgesehene Anschlußbolzen oder dergleichen leicht erfaßt und das Gerät an den Ackerschlepper angeschlossen werden. Aus Sicherheitsgründen sind die geräteseitigen Anschlußbolzen in den Hakenausnehmungen zumindest der unteren Haken durch Verriegelungsvorrichtungen, die einen Sperrhebel aufweisen können, zu sichern. Versäumt es die Bedienungsperson, beim Ankuppeln die Verriegelungsvorrichtung zu entriegeln, kann es leicht vorkommen, daß die geräteseitigen Anschlußbolzen gegen den oder die Sperrhebel stoßen und dabei Teile der Verriegelungsvorrichtung verbiegen, so daß ein ordnungsgemäßes Verriegeln nicht mehr möglich ist. Bei Wartungsarbeiten aber lassen sich solche Beschädigungen nur schwer feststellen, da der größte Teil der Verriegelungsvorrichtung in den Kupplungsrahmen voll integriert ist. Um Beschädigungen an der Verriegelungsvorrichtung beim Anschließen eines Gerätes an den Kupplungsrahmen auszuschließen, ist deshalb bereits vorgeschlagen worden (US-A-3 807 769, US-A-3 531 140), den Sperrhebel derart auszubilden, daß er beim Anschlagen gegen einen geräteseitigen Anschlußbolzen selbsttätig in seine entriegelte Stellung verschwenkt. Derartige Vorrichtungen sind aber in ihrem Aufbau relativ aufwendig und damit auch teuer.

Bei dem bekannten Kupplungsrahmen, von dem die Erfindung ausgeht (US-A-3 498 638), ist bereits Vorsorge dafür getroffen worden, daß die Verriegelungsvorrichtung beim Auftreffen des Sperrhebels gegen einen geräteseitigen Anschlußbolzen nicht oder nur unwesentlich beschädigt wird. Im einzelnen ist hier der Zapfen mit dem Führungsteil derart fest verbunden, daß seine Enden sich bei der Höhenverstellung in in dem Kupplungsrahmen seitlich eingearbeiteten Schlitzen verschieben und dabei den Sperrhebel zwischen seinen beiden Stellungen verschwenken, wozu ebenfalls in dem Sperrhebel ein weiterer Schlitz eingearbeitet ist, durch den der Zapfen geführt ist. Beide Schlitze sind gegeneinander derart versetzt angeordnet, daß ein Verriegelungseffekt erreicht wird. Eine derartige Verriegelung ist zwar robust, aber dennoch aufwendig in der Herstellung.

Die mit der Erfindung zu lösende Aufgabe wird darin gesehen, den Kupplungsrahmen mit einer Verriegelungsvorrichtung auszurüsten, die in ihrem Aufbau relativ einfach, aber robust ist, so daß, wenn in der Verriegelungsstellung der Anschlußbolzen gegen den Sperrhebel auftreffen sollte, Beschädigungen weitgehend ausgeschlossen sind.

Diese Aufgabe ist gemäß der Erfindung dadurch gelöst worden, daß der Zapfen ortsfest am Kupplungsrahmen angeordnet und der Schlitz im Führungsteil vorgesehen ist, der derart an dem Sperrhebel anliegt, daß beim Gleiten des Führungsteils auf dem Zapfen während der Vertikalverstellung der Steuerstange der Sperrhebel zwischen seinen beiden Stellungen verschwenkt wird.

Auf diese Weise ist die Verriegelungsvorrichtung für den Kupplungsrahmen äußerst einfach, aber robust ausgebildet und weist lediglich einen schwenkbaren Teil, und zwar den Sperrhebel, auf, der über die Höhenverstellung des Führungsteils verschwenkt wird und lose gegen den Führungsteil anliegt. Sollten auf den Sperrhebel von außen kommende Kräfte, beispielsweise durch den Anschlußbolzen, einwirken, so kann der Führungsteil infolge seiner Anordnung in der Führung nicht in Richtung der Kraft ausweichen, so daß Beschädigungen weitgehend ausgeschlosen sind, weil derartige Kräfte von dem ortsfesten Zapfen aufgefangen werden.

Um den Sperrhebel in einfacher Weise zwischen seinen Stellungen verschwenken zu können, wird nach der Erfindung ferner vorgeschlagen, daß der Führungsteil mindestens eine Kontaktfläche aufweist, die gegen mindestens eine Kontaktfläche am Sperrhebel zur Anlage bringbar und so angeordnet ist, daß bei der Höhenverstellung des Führungsteils in der Führung der Sperrhebel verschwenkt.

Zweckmäßig kann nach der Erfindung der Zapfen horizontal verlaufen und über Stützteile am Kupplungsrahmen angeordnet sein, wobei die Stützteile eine relativ dicke Wandstärke aufweisen und so ein Verbiegen des Zapfens verhindern.

Um die Sperrstellung des Sperrhebels justieren zu können wird ferner nach der Erfindung vorgeschlagen, daß eine Kontaktfläche am Führungsteil Einstellmittel aufweist, die gegen eine Kontaktfläche am Stellhebel zur Anlage bringbar sind, wobei die Einstellmittel in einfacher Weise aus einer Stellschraube bestehen können.

Damit der Sperrhebel in einfacher Weise durch die Höhenbewegung des Führungsteils verschwenkt werden kann, kann nach einem weiteren erfindungsgemäßen Vorschlag der Führungsteil zwei Kontaktflächen und der Sperrhebel ein erstes und ein zweites Paar Kontaktflächen aufweisen, wobei die Oberflächen eines jeden Paares miteinander einen Winkel größer als 90° bilden und jedes Paar gegen jeweils eine der Kontaktflächen am Führungsteil zur Anlage bringbar ist. Im einzelnen können dabei die Oberflächen des einen Paares Kontaktflächen einen stumpfen Winkel und die Oberflächen des anderen Paares Kontaktflächen einen überstumpfen Winkel bilden, wobei die beiden Paare Kontaktflächen untereinander angeordnet sind und die Oberflächen des unteren Paares mit Bezug auf den Haken miteinander den stumpfen Winkel bilden.

In der Zeichnung ist ein nachfolgend näher erläutertes Ausführungsbeispiel der Erfindung dargestellt, es zeigt:

Fig. 1 einen teilweise dargestellten Ackerschlepper mit einer Dreipunktgerätekupplung, an der ein Kupplungsrahmen angeschlossen ist;

Fig. 2 den Kupplungsrahmen;

Fig. 3 einen Schenkel des Kupplungsrahmens nach Fig. 2 mit der Verriegelungsvorrichtung und

Fig. 4 den Schenkel des Kupplungsrahmens mit Blickrichtung der Linie 4–4 in Fig. 3.

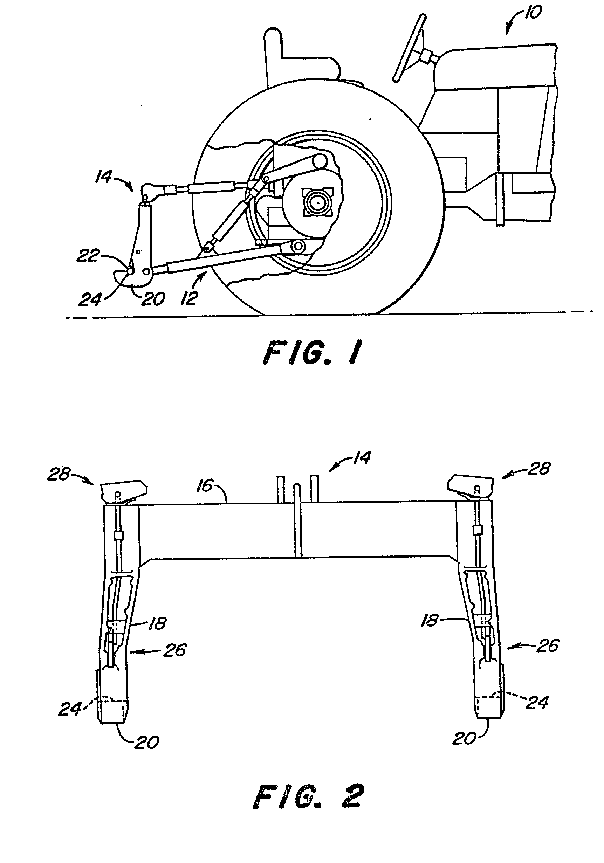

In Fig. 1 der Zeichnung ist ein Ackerschlepper 10 teilweise dargestellt, der mit einer herkömmlichen Dreipunktgerätekupplung 12 versehen ist, an die ein als Schnellkuppler ausgebildeter Kupplungsrahmen 14 angeschlossen ist.

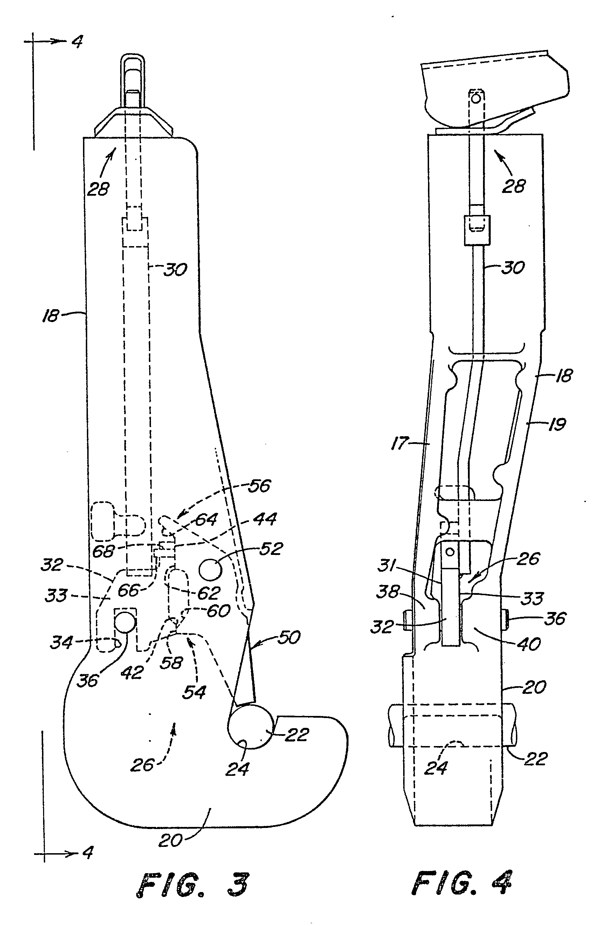

Aus Fig. 2 ist zu ersehen, daß der Kupplungsrahmen 14 umgekehrt u-förmig angeordnet ist, wobei sein Steg mit 16 und nach unten weisende Schenkel mit 18 bezeichnet sind. Die Schenkel 18 sind an den äußeren Enden des Steges angeordnet, mit diesen fest verbunden und mit Seitenwänden 17 und 19 versehen, die am besten aus Fig. 4 zu ersehen sind. Die unteren Teile der Schenkel sind mit sich nach rückwärts erstreckenden und nach oben öffnenden Haken 20 versehen, in denen Anschlußbolzen 22 eines der Einfachheit halber in der Zeichnung nicht dargestellten Gerätes aufgenommen werden können. Die Anschlußbolzen 22 sind lösbar in Hakenausnehmungen 24 der Haken 20 angeordnet und über je eine Verriegelungsvorrichtung 26, die über einen herkömmlichen Hebelmechanismus 28, der oben an den Schenkeln 18 angeordnet ist, betätigt werden können. Derartige Hebelmechanismen 28 sind im einzelnen in der US-A-3 544 133 beschrieben.

Im einzelnen ist aus den Fig. 3 und 4 zu entnehmen, daß jede Verriegelungsvorrichtung 26 eine Steuerstange 30 mit einem oberen Ende aufweist, die mit dem herkömmlichen Hebelmechanismus verbunden, beispielsweise verschraubt ist. Das untere Ende der Steuerstange 30 ist fest, beispielsweise durch Schweißen, mit einem Führungsteil 32 verbunden, dessen Seiten mit 31 und 33 bezeichnet sind und in den ein Schlitz 34 eingearbeitet ist, der sich im wesentlichen parallel zu der Längsachse der Steuerstange 30 erstreckt. Der Schlitz 34 dient zur Aufnahme eines Zapfens 36, derart, daß der Führungsteil 32 vertikal mit Bezug auf den Zapfen 36 auf diesem verschiebbar ist. Der Zapfen 36 erstreckt sich quer durch Bohrungen in sich gegenüberliegenden Stützteilen 38 und 40 der Schenkel 16. Er wird durch Sprengringe oder dergleichen in dem Schenkel gesichert. Der Führungsteil 32 ist zwischen den Stützteilen 38 und 40 angeordnet und weist eine Stärke auf, die ihn gegen Verbiegen resistent macht. Der Führungsteil 32 ist ferner mit Bezug auf die Fahrtrichtung mit rückwärtigen Kontaktflächen 42 und 44 ausgerüstet.

Ein Sperrhebel 50 ist im Bereich seines oberen Endes an dem Schenkel 18 über einen Zapfen 52 gelagert. Dieser ist rückwärtig und über dem Zapfen 36 angeordnet, wobei das untere Ende des Sperrhebels 50 dazu dient, den Anschlußbolzen 22 in der Hakenausnehmung 24 des Hakens 20 lösbar zu halten. An seiner dem Führungsteil 32 zugelegenen Seite ist der Sperrhebel 50 mit Kontaktarmen 54 und 56 versehen, wobei der Kontaktarm 54 ein Paar Kontaktflächen 58 und 60 bildet, deren Oberflächen derart miteinander verbunden sind, daß sie miteinander einen stumpfen Winkel, d. h. einen Winkel größer als 90° jedoch kleiner als 180° bilden. Vorzugsweise beträgt der Winkel 145°. Auch der Kontaktarm 56 ist mit zwei Kontaktflächen 62 und 64 versehen, deren Oberflächen derart miteinander verbunden sind, daß sie einen überstumpfen Winkel von 230° bilden. Eine Stellschraube 66 ist in eine Bohrung 68 in dem Führungsteil 32 einschraubbar und bildet damit einen einstellbaren Anschlag, über den die Sperrstellung des Sperrhebels 50 justiert werden kann.

In Fig. 3 ist die Verriegelungsvorrichtung 36 in ihrer Sperrstellung dargestellt, in der das untere Ende des Sperrhebels 50 in herkömmlicher Weise ein Austreten des Anschlußbolzens 22 aus der Hakenausnehmung 24 verhindert. Der Sperrhebel 50 wird in dieser Position dadurch gehalten, daß die Kontaktfläche 58 gegen die Kontaktfläche 42 anliegt.

Um nun den Anschlußbolzen 22 in der Hakenausnehmung 24 freigeben zu können, wird die Steuerstange 30 nach oben bewegt durch die Betätigung des Hebelmechanismus 28. Hierdurch wird auch der Führungsteil 32 nach oben bewegt, so daß die Kontaktfläche 42 entlang der Kontaktflächen 58 und 60 gleitet und die Kontaktfläche 44 gegen die Kontaktfläche 64 zur Anlage kommt, wodurch der Sperrhebel 50 mit Bezug auf Fig. 3 im Uhrzeigerdrehsinn verschwenkt wird. Hierdurch wird das untere Ende des Sperrhebels 50 mit Bezug auf Fig. 3 nach links verschwenkt, wodurch der Anschlußbolzen 22 in der Hakenausnehmung 24 frei wird und aus dieser austreten kann.

Um nun den Anschlußbolzen 22 in der Hakenausnehmung 24 wieder verriegeln zu können, wird die Steuerstange 30 nach unten durch Betätigung des Hebelmechanismus 28 bewegt. Hierdurch wird der Führungsteil 32 nach unten verschoben, wobei seine Kontaktfläche 42 gegen die Kontaktfläche 60 zur Anlage kommt und den Sperrhebel 50 entgegen dem Uhrzeigerdrehsinn zurück in seine Sperrstellung, die in Fig. 3 dargestellt ist, verschwenkt. In dieser Stellung verhindert das untere Ende des Sperrhebels 50 wiederum ein Austreten des Anschlußbolzens 22 aus der Hakenausnehmung 24.

Sobald sich die Verriegelungsvorrichtung in ihrer Sperrstellung befindet, ist sie gegen Verbiegen gesichert. Ein Grund dafür besteht darin, daß der Sperrhebel 50 und der Führungsteil 32 eine relativ große Breite aufweisen und damit gegen Verbiegen stärker gesichert sind als die relativ dünnen Hebel, die in der Verriegelungsvorrichtung nach der US-A-3 544 133 verwendet werden. Hinzu kommt, daß, wie aus Fig. 4 hervorgeht, der Zapfen 36 von den Stützteilen 38 und 40 getragen wird, die wesentlich dicker im Bereich des Zapfens 36 sind als in anderen Gebieten der Seitenwände 17 und 19 der Schenkel 18. Ferner wird darauf hingewiesen, daß der Abstand zwischen den Stützteilen 38 und 40 nur etwas größer ist als die Stärke des Führungsteils 32. Damit sind die Abstände zwischen den gegenüberliegenden Seiten 31 und 33 des Führungsteiles 32 und der korrespondierenden Stützteile 38 und 40 wesentlich schmäler als der Durchmesser des Zapfens 36. Gleichfalls ist die Stärke der Stützteile 38 und 40 größer als der Durchmesser des Zapfens 36. Diese Abmessungsverhältnisse tragen alle dazu bei, daß sich der Zapfen 36 nicht verbiegen kann. Desweiteren wird die Last von dem Sperrhebel 50 über den Führungsteil 32 auf den Zapfen 36 übertragen, wodurch die Belastung des Zapfens 52 und der Steuerstange 30 weiter reduziert wird.

## Patentansprüche

1. Kupplungsrahmen (14) mit wenigstens einem an ihm starr angeordneten, eine Hakenausnehmung (24) aufweisenden Haken (20) und einem Sperrhebel (50), der über eine höhenverstellbare Steuerstange (30) zwischen einer einen Anschlußbolzen (22) in der Hakenausnehmung (24) verriegelnden Stellung und einer den Anschlußbolzen freigebenden Stellung an dem Kupplungsrahmen (14) vertikal verschwenkbar gelagert ist, wobei die Steuerstange (30) mit einem Führungsteil (32) versehen und in Höhenrichtung über einen Schlitz (34) und einen Zapfen (36) zwangsgeführt ist, dadurch gekennzeichnet, daß der Zapfen (36) ortsfest am Kupplungsrahmen (14) angeordnet und der Schlitz (34) im Führungsteil (32) vorgesehen ist, der derart an dem Sperrhebel (50) anliegt, daß beim Gleiten des Führungsteils (32) auf dem Zapfen (36) während der Vertikalverstellung der Steuerstange (30) der Sperrhebel (50) zwischen seinen beiden Stellungen verschwenkt wird.

2. Kupplungsrahmen (14) nach Anspruch 1, dadurch gekennzeichnet, daß der Führungsteil (32) mindestens eine Kontaktfläche (42 bzw. 44) aufweist, die gegen mindestens eine Kontaktfläche (58, 60, 62 bzw. 64) am Sperrhebel (50) zur Anlage bringbar und so angeordnet ist, daß der Führungsteil bei der Höhenverstellung des Führungsteils (32) in der Führung den Sperrhebel (50) verschwenkt.

3. Kupplungsrahmen (14) nach Anspruch 1, dadurch gekennzeichnet, daß der Zapfen (36) horizontal verläuft und über Stützteile (38, 40) am Kupplungsrahmen (14) angeordnet ist.

4. Kupplungsrahmen (14) nach Anspruch 2, dadurch gekennzeichnet, daß eine Kontaktfläche (42 bzw. 44) am Führungsteil (32) Einstellmittel aufweist, die gegen eine Kontaktfläche (58, 60, 62 bzw. 64) am Sperrhebel (50) zur Anlage bringbar sind.

5. Kupplungsrahmen (14) nach einem oder mehreren der vorherigen Ansprüche, dadurch gekennzeichnet, daß der Führungsteil (32) zwei Kontaktflächen (42, 44) und der Sperrhebel (50) ein erstes und ein zweites Paar Kontaktflächen (58, 60 und 62, 64) aufweisen, wobei die Oberfläche eines jeden Paares miteinander einen Winkel größer als 90° bilden und jedes Paar gegen jeweils eine der Kontaktflächen (42, 44) am Führungsteil (32) zur Anlage bringbar sind.

6. Kupplungsrahmen (14) nach Anspruch 5, dadurch gekennzeichnet, daß die Oberflächen eines Paares Kontaktflächen (58, 60) einen stumpfen Winkel und die Oberflächen des anderen Paares Kontaktflächen (62, 64) einen überstumpfen Winkel bilden.

7. Kupplungsrahmen (14) nach Anspruch 5, dadurch gekennzeichnet, daß die beiden Paare Kontaktflächen (58, 60 und 62, 64) unter einander angeordnet sind und die Oberflächen des unteren Paares mit Bezug auf den Haken (20) miteinander den stumpfen Winkel bilden.

## Claims

1. Coupling frame (14) with at least one hook (20) arranged rigidly thereon, with a hook recess (24), and a blocking lever (50) which is vertically pivotally mounted on the coupling frame (14) [movable] by a control rod (30) adjustable in height between a position locking a coupling bar (22) in the hook recess (24) and a position freeing the coupling bar, wherein the control rod (30) is provided with a guide part (32) and is confined to the height direction by a slot (34) and a pin (36), characterized in that the pin (36) is positionally fixed on the coupling frame (14) and the slot (34) is provided in the guide part (32), which so bears on the blocking lever (50) that, with the sliding of the guide part (32) on the pin (36) during the vertical adjustment of the control rod (30), the blocking lever is swung between its two positions.

2. Coupling frame (14) according to claim 1, characterized in that the guide part (32) has at least one contact surface (42 or 44) which can be brought to bear against at least one contact surface (58, 60, 62 or 64) on the blocking lever (50) and is so arranged that in the height adjustment of the guide part (32) in the guiding the guide part swings the blocking lever (50).

3. Coupling frame (14) according to claim 1, characterized in that the pin (36) runs horizontally and is arranged by way of support parts (38, 40) on the coupling frame (14).

4. Coupling frame (14) according to claim 2, characterized in that one contact surface (42 or 44) on the guide part (32) comprises adjusting means, which can be brought into abutment with a contact surface (58, 60, 62 or 64) on the blocking lever (50).

5. Coupling frame (14) according to one or more of the preceding claims, characterized in that the guide part (32) has two contact surfaces (42, 44) and the blocking lever (50) has a first and a second pair of contact surfaces (58, 60 and 62, 64), wherein the surfaces of each pair together form an angle greater than 90° and each pair can be brought into contact with a respective one of the contact surfaces (42, 44) on the guide part.

6. Coupling frame (14) according to claim 5, characterized in that the surfaces of one pair of contact surfaces (58, 60) form an obtuse angle and the surfaces of the other pair of contact surfaces (62, 64) form a reflex angle.

7. Coupling frame (14) according to claim 5, characterized in that the two pairs of contact surfaces (58, 60 and 62, 64) are arranged under one another and the surfaces of the lower pair with reference to the hook (20) together form the obtuse angle.

**Revendications**

1. Cadre d'attelage (14) comportant au moins un crochet (20) présentant un creux de crochet (24) qui y est placé fixement et un levier de blocage (50) qui est placé sur le cadre d'attelage (14) de façon à pouvoir pivoter verticalement au moyen d'une barre de commande (30) réglable en hauteur entre une position bloquant une cheville de raccordement (22) dans le creux (24) et une position débloquant la cheville de raccordement, la barre de commande (30) comportant une partie de guidage (32) et étant guidée de façon forcée en direction verticale au moyen d'une fente (34) et d'un tenon (36), caractérisé en ce que le tenon (36) est placé fixement sur le cadre d'attelage (14) et la fente (34) est prévue dans la partie de guidage (32) qui est en contact avec le levier de blocage (50) de telle façon que, lorsque la partie de guidage (32) glisse sur le tenon (36), pendant le déplacement vertical de la barre de commande (30), le levier de blocage (50) pivote entre ses deux positions.

2. Cadre d'attelage (14) selon la revendication 1, caractérisé en ce que la partie de guidage (32) comporte au moins une surface de contact (42 ou 44) qui peut être amenée au contact d'au moins une surface de contact (58, 60, 62 ou 64) située sur le levier de blocage (50), et est agencée de telle façon que la partie de guidage pivote lors du déplacement vertical de la partie de guidage (32) dans le guide le levier de blocage (50).

3. Cadre d'attelage (14) selon la revendication 1, caractérisé en ce que le tenon (36) s'étend horizontalement et est placé sur le cadre d'attelage (14) au moyen d'éléments d'appui (38, 40).

4. Cadre d'attelage (14) selon la revendication 2, caractérisé en ce qu'une surface de contact (42 ou 44) située sur la partie de guidage (32) comporte des moyens de réglage qui peuvent être amenés au contact d'une surface de contact (58, 60, 62 ou 64) située sur le levier de blocage (50).

5. Cadre d'attelage (14) selon une ou plusieurs des revendications précédentes, caractérisé en ce que la partie de guidage (32) comporte deux surfaces de contact (42, 44) et le levier de blocage (50) une première paire et une seconde paire de surfaces de contact (58, 60 et 62, 64), les surfaces de chaque paire faisant entre elles un angle supérieur à 90° et chaque paire pouvant être amenée respectivement au contact de l'une des surfaces de contact (42, 44) situées sur la partie de guidage (32).

6. Cadre d'attelage (14) selon la revendication 5, caractérisé en ce que les surfaces d'une paire de surfaces de contact (58, 60) font un angle obtus et les surfaces de l'autre paire de surfaces de contact (62, 64) un angle rentrant.

7. Cadre d'attelage (14) selon la revendication 5, caractérisé en ce que les deux paires de surfaces de contact (58, 60 et 62, 64) sont disposées l'une au-dessous de l'autre et les surfaces de la paire inférieure en se référant au crochet (20) font entre elles l'angle obtus.

*FIG. 1*

*FIG. 2*

FIG. 3

FIG. 4